# FASCICULE DE BREVET EUROPEEN

(11) **EP 0 959 688 B1**
(45) Date de publication et mention de la délivrance du brevet: **28.01.2004**
(21) Numéro de dépôt: 98908163.3
(22) Date de dépôt: 10.02.1998
(51) Int. Cl.: A23C 19/16, A23C 19/068

(54) **FROMAGES AFFINES ET PROCEDE DE FABRICATION**
GEREIFTER KÄSE UND VERFAHREN ZU DESSEN HERSTELLUNG
MATURED CHEESE AND METHOD FOR MAKING SAME

(30) Priorité: 10.02.1997 FR 9701503
(43) Date de publication de la demande: 01.12.1999
(73) Titulaire: FROMAGERIES BEL, 75008 Paris (FR)
(72) Inventeur: LECLERC, Guy, F-41100 Saint-Ouen (FR); DELESPAUL, Gilbert, F-41100 Vendôme (FR); CHASSAGNE, Marie-Hélène, F-41100 Marcilly en Beauce (FR); GREMILLET, Jean-Paul, F-41100 Naveil (FR); BOULLAND, Jean-Claude, F-78800 Houilles (FR)
(74) Mandataire: Jacobson, Claude
(86) Numéro de dépôt international: PCT/FR1998/000257
(87) Numéro de publication internationale: WO 1998/034493

(56) Documents cités:
- EP-A- 0 033 635
- EP-A- 0 615 691
- WO-A-86/06588
- CH-A- 381 466
- DE-C- 653 344
- FR-A- 1 437 562
- FR-A- 2 144 550
- FR-A- 2 608 901
- FR-A- 2 710 820
- US-A- 2 641 545

## Description

L'invention concerne un nouveau produit alimentaire fromager, et plus précisément en un fromage affiné à croûte naturelle pelable et son procédé de fabrication.

Un des buts de l'invention est de proposer un fromage essentiellement de type traditionnel, affiné, dont les propriétés sont conférées essentiellement par une flore de surface entraînant la formation d'une croûte superficielle, cette croûte qui grâce au procédé de l'invention pourra être détachée de façon simple et rapide par « pelage », soit par le consommateur au moment de sa consommation, soit par l'industriel au stade de la production et/ou de son conditionnement.

Pour l'invention, l'aptitude au « pelage » ou « pelabilité » sera définie par le fait qu'après amorçage, un seul geste suffit pour détacher et enlever la croûte du fromage du fait de sa non-adhérence à la pâte (au même titre qu'une peau de banane).

En technologie traditionnelle, les fromages affinés sont obtenus par les étapes successives suivantes : prise en masse ou coagulation d'un lait standardisé ou d'un concentré laitier par action d'un agent coagulant, mise en forme du caillé égoutté ou non dans des moules, égouttage spontané ou par action de la pression permettant d'obtenir l'extrait sec désiré du produit final, salage ou saumurage, qui confère à la pâte la teneur en sel souhaitée et permet la formation d'une croûte superficielle et ressuyage.

Pour les fromages à croûte naturelle, ces étapes sont suivies d'un ensemencement de la surface du fromage en une flore superficielle adaptée aux types de fromages que l'on veut obtenir, et que l'on fait développer au cours d'une période d'affinage plus ou moins longue au cours de laquelle on procède à des soins favorisant la croissance de la flore.

La coagulation s'effectue soit par la baisse du pH du lait jusqu'à son point isoélectrique où il se prend en masse, soit par action d'enzymes protéolytiques qui déstructurent la caséine et permettent sa gélification.

Dans le premier cas, on peut utiliser des acides alimentaires, des ferments lactiques qui transforment le lactose en acide lactique abaissant le pH ou des agents acidifiants tels que la glucono-delta-lactone. Bien entendu, dans ce cas, le pH de la pâte obtenue est égal ou inférieur à 5 et la pâte de nature acide, ce qui n'autorise que le développement d'une flore superficielle acidophile.

Dans le cas de la coagulation par un agent enzymatique, tels que la chymosine issue de la présure de veau, de présures microbiennes ou obtenues par fermentation à l'aide de microorganismes modifiés génétiquement, la pâte a un pH plus élevé (supérieur à 5,0), ce qui ne permet que le développement d'une flore superficielle relativement neutrophile.

Ces contraintes d'association type de flore/acidité ou non de la pâte sont un frein au développement de produits nouveaux présentant une nouvelle texture ou un goût nouveau qui résulteraient par exemple du développement d'une flore neutrophile ou basophile sur des pâtes acides ou inversement. Actuellement, la seule possibilité pour faire développer une flore neutrophile sur un caillé acide consiste à agir en deux phases : implanter dans une première étape une flore désacidifiante, qui permet une remontée du pH et implanter dans un deuxième temps la flore neutrophile.

Cette façon de procéder conduit à des durées d'affinage relativement longues entraînées par la succession optimale des flores et exige plusieurs soins successifs. Il peut donc être avantageux de simplifier les procédés.

En outre, quel que soit le type de pâte et la flore superficielle utilisées, cette dernière est implantée directement sur la pâte où elle va se développer jusqu'au stade requis pour le développement de l'arôme et de la texture souhaités du produit.

Le temps d'affinage est variable selon le type de produit et est de quelques jours à quelques mois. Pour la plupart des fromages, cette croûte finale, bien que comestible, est souvent éliminée au moment de la consommation du fait de son épaisseur, de son aspect ou de son goût. Or, du fait de son adhérence à la pâte, son élimination n'est pas toujours facile et requiert l'utilisation d'un ustensile approprié (couteau, grattoir).

Par ailleurs, la réalisation de mini-fromages à croûte naturelle obtenus par un procédé conventionnel, conduit fréquemment, si l'on souhaite garantir une durée de vie satisfaisante à ces produits, à une croûte importante par rapport à la masse faible du fromage. La difficulté et la perte de produit occasionnées par l'élimination de la croûte déprécient ces produits.

A ce jour, dans le domaine fromager, seules les croûtes artificielles constituées soit par des cires microcristallines et/ou de paraffine ou leurs succédanés, soit par des enduits présentent la caractéristiques d'être pelables.

Si l'on souhaite conférer à ce type de fromages, les propriétés organoleptiques, c'est-à-dire notamment le goût et l'arôme obtenus par l'action de germes de flore superficielle, il est nécessaire de procéder en plusieurs étapes. Il faut d'abord ensemencer la surface du caillé en une flore superficielle souhaitée et après développement, éliminer la croûte formée et enrober le produit de l'enrobage souhaité. Comme précédemment pour les fromages à croûte naturelle, se pose le problème de l'élimination facile de cette croûte au stade industriel.

L'invention se propose donc de résoudre les problèmes liés à la réalisation d'une croûte de fromage de faible épaisseur tout en limitant les risques de dessiccation de surface, à l'élimination facile de cette croûte et au développement de nouveaux produits grâce à la dissociation de la nature de la pâte et de la nature de la flore, en offrant au consommateur des fromages présentant les caractéristiques organoleptiques des fromages traditionnels à croûte naturelle, et éventuellement également les aspects de ceux-ci.

L'invention a pour objet un fromage affiné selon la revendication 1.

Selon un premier mode de réalisation, le film est maintenu sur le produit final après développement de la flore d'affinage et constitue une croûte naturelle détachable par pelage.

Dans une variante de ce premier mode de réalisation, le fromage affiné comprend également au moins un moyen de séparation de la croûte constitué par un ruban dont au moins une partie de la longueur s'étend entre la pâte fromagère et la croûte, de préférence au moins une partie s'étendant le long d'au moins une partie du pourtour de la pâte fromagère, et dont au moins une extrémité dépasse hors de la croûte.

Selon une première alternative, le moyen de séparation est constitué par un ruban s'étendant transversalement par rapport au pourtour de la pâte fromagère.

Selon une deuxième alternative, le fromage obtenu comporte deux moyens de séparation de la croûte constitués respectivement par deux rubans entrecroisés.

Le(s) ruban(s) est(sont) constitué(s) d'au moins un film en un matériau non tissé et non dégradable d'une largeur avantageusement comprise entre 5 et 10 mm. Toutefois, lorsque le fromage est sous forme d'un cylindre plat à faces planes ou à faces bombées, la largeur du film peut être égale à la largeur du talon.

Grâce à cette structure, il suffit d'exercer une traction sur une extrémité du ruban en l'éloignant du fromage pour obtenir le déchirement de la croûte ; au moins une extrémité du ruban dépassant hors de la croûte, la préhension par les doigts et par conséquent l'amorce du déchirement sont facilités.

Une croûte naturelle pelable telle que décrite ci-dessus permet la mise en place de tels moyens de séparation de la croûte constitués par des rubans déposés autour du fromage.

Par ailleurs, un brevet français publié sous le N° 2 144 550 décrit un mode de pose de rubans sur une pâte fromagère. La pose du ruban est réalisée juste avant un enrobage par trempage des fromages dans une solution d'enduction; cependant les enseignements de ce document ne peuvent pas être appliqués à la fabrication de fromages à croûte naturelle et traditionnelle, pour lesquels la croûte, intégrée à la pâte, est obtenue par le développement d'une flore superficielle d'affinage ensemencée directement sur celle-ci.

Selon un deuxième mode de réalisation, le film est retiré par pelage après le développement de la flore d'affinage et la pâte fromagère nue est enrobée au moyen d'un enrobage pour fromages.

Le dépôt d'un gel semi-perméable ou d'autres matériaux autour d'un fromage a déjà été décrit dans la littérature.

On peut citer DE-A-653 344 qui décrit l'application de substances gélifiantes, notamment de la gélatine sur un fromage frais non affiné et ne pouvant pas l'être du fait de l'absence d'ensemencement de la superficie du fromage.

On peut citer également DE-A-623 383 qui décrit la réalisation d'une enveloppe de pectine au lieu et place de gélatine, sur un fromage à pâte molle ou sur un fromage fondu.

Selon ce document, la pectine se substitue à la couche de gélatine précédemment décrite pour éviter les inconvénients liés à cette dernière (décollement de la surface du fromage, solubilité à chaud, milieu de culture conduisant à la prolifération de bactéries, levures et moisissures).

En outre, l'objectif desdits enrobages est d'assurer la protection du produit et de remplacer sur des fromages frais ou des fromages fondus la croûte des fromages présente dans les fromages à pâte dure présentant une croûte naturelle.

On peut citer également WO 86/06588 décrivant l'application sur du caillé peu affiné, d'une enveloppe extérieure essentiellement semi-perméable constituée par un gel alimentaire qui est une solution aqueuse d'au moins un composé choisi parmi les alginates, les carraghénates, la gélatine, les protéines alimentaires ou les mélanges de ceux-ci. Dans ce cas, l'enveloppe semi-perméable est appliquée sur un caillé légèrement affiné de quelques heures à quelques jours et elle est ensemencée d'une flore superficielle.

L'enrobage du produit par un gel semi-perméable a, dans ce cas, un objectif précis, à savoir le ralentissement de l'affinage, et l'amélioration de la conservation.

Ce document n'a pas pour but la fourniture d'une croûte pelable par enrobage à l'aide d'un gel semi-perméable d'un caillé immédiatement après l'égouttage, de préférence avant l'étape de saumurage.

En outre, les gels semi-perméables cités dans ce document, à savoir les gels à base de gélatine, de carraghénates, d'alginates ou de protéines alimentaires, s'ils sont un excellent support pour le développement d'une flore d'affinage ne conviennent pas dans les conditions employées dans le document antérieur pour la fabrication d'un film détachable par simple pelage et pouvant servir de support à une flore d'affinage.

En effet, pour être éventuellement pelables, les solutions devraient être utilisées à des concentrations telles que la viscosité ne serait pas compatible avec un procédé industriel de mise en oeuvre. Par ailleurs, la gélatine n'est pelable qu'à des concentrations très élevées, de l'ordre de 400 g par litre, ce qui la rend inutilisable pour l'objectif de l'invention.

Pour la réalisation de l'invention, la Demanderesse a sélectionné parmi les hydrocolloïdes disponibles, une famille d'hydrocolloïdes présentant en solution une viscosité telle que définie ci-dessus conduisant à des gels qui se caractérisent par :
- une gélification rapide au moment du dépôt sur le caillé partiellement ou totalement égoutté ;
- une résistance mécanique à faible épaisseur permettant d'assurer les étapes ultérieures du procédé tout en maintenant la forme du produit ;
- une bonne aptitude au développement des flores d'affinage ;
- une capacité de transfert des substrats des flores et des composés d'arômes produits par la flore ensemencée ;
- une bonne pelabilité au moment de l'élimination de la croûte.

Avantageusement, la viscosité de la solution aqueuse est comprise entre 0,015 et 0,25 Pa.s, mesurée pour un gradient de vitesse de 152 s⁻¹ à 60°C.

Le gel alimentaire est constitué au moins en partie de gomme gellane.

Ce polysaccharide peut être utilisé seul ou en mélange, soit avec des polysaccharides d'autres origines, par exemple végétale, soit avec des protéines.

Avantageusement, dans ce cas, le mélange contiendra au moins 30 %, de préférence 50 % d'un polysaccharide d'origine microbienne.

On préfère tout particulièrement la gomme gellane qui est un polysaccharide d'origine microbienne sous sa forme commerciale désacétylée.

Le gel alimentaire selon l'invention est choisi de manière à ce que le temps de gélification soit de préférence non supérieur à 10 secondes, et mieux à 5 secondes, dans les conditions d'application choisies.

Le film stabilisé après un repos d'environ 24 heures a avantageusement une épaisseur de 0,3 à 0,5 mm, de préférence comprise entre 0,2 et 0,5 mm, les bornes étant incluses.

L'invention s'applique à tous types de fromages dont les caractéristiques organoleptiques sont conférées par l'action d'une flore de surface, quels que soient le format, le grammage et la technologie de fabrication du caillé ou de la pâte fromagère de base.

Par « fromage », on entend aussi bien des produits définis par la législation sous le terme de fromages que des produits laitiers commercialisés sous d'autres appellations pouvant contenir des composants non laitiers telles que des matières premières végétales ou animales.

Ainsi, l'invention concerne toutes les familles de fromages connus tels que les fromages frais, les fromages à pâte molle, à pâte pressée cuite ou non, à pâte filée, etc.. auxquelles on veut conférer des qualités organoleptiques et texturales essentiellement par action d'une flore superficielle d'affinage.

L'invention a également pour objet un procédé de fabrication d'un fromage affiné : selon les revendications 15 et 25.

Le procédé selon l'invention peut en outre présenter une ou plusieurs des caractéristiques suivantes :
- pour disposer au moins une partie d'un moyen de séparation de croûte contre la pâte fromagère, on pose la pâte fromagère après égouttage sur une partie d'une bande destinée à constituer un ruban formant le moyen de séparation de croûte ;
- on suspend une pâte fromagère sur une partie d'une bande destinée à constituer un ruban et on plonge l'ensemble dans au moins une solution parmi une solution d'hydrocolloïde(s) et une solution bactérienne de façon à ce qu'au moins une partie du futur ruban soit recouverte d'une couche de cette solution ;
- on coupe la bande pour constituer le ruban en laissant deux extrémités dépasser de la couche d'hydrocolloïde(s) ;
- on ensemence la couche d'hydrocolloïde(s) au moyen d'une flore superficielle d'affinage que l'on laisse développer pendant une durée nécessaire à l'obtention de caractéristiques organoleptiques prédéterminées ;
- on suspend une pâte fromagère sur une partie d'une bande destinée à constituer un ruban et on vaporise l'ensemble par au moins une solution parmi une solution d'hydrocolloïdes et une solution bactérienne de façon à ce qu'au moins une partie du futur ruban soit recouverte d'une couche de cette solution.

Selon une première alternative, l'invention concerne les fromages frais à pâte molle, pressée cuite ou non et filée. Dans ce cas, les fromages sont obtenus par prise en masse ou coagulation de lait de toute espèce animale selon les procédés en vigueur en technologie fromagère. Le lait standardisé en matière grasse et matière protéique ou le concentré laitier sont de préférence pasteurisés avant de subir l'étape de coagulation.

La gélification ou prise en masse est obtenue soit par addition d'une enzyme protéolytique telle que la présure, soit par baisse du pH jusqu'au point isoélectrique du gel par l'action de ferments lactiques, d'acides alimentaires ou d'agents acidifiants tels que la glucono-delta-lactone.

Le coagulum obtenu est alors égoutté. Afin de faciliter l'expulsion du lactosérum, il subit une étape de découpage et de tranchage, ce qui permet l'obtention de grains de caillé. Ces derniers subissent alors une étape de mise en forme par un procédé approprié. On peut citer à titre d'exemple le passage dans des tubes de moulage traditionnellement utilisés ou des formeuses appropriées. Cette étape permet de conférer au fromage la forme finale que l'on veut lui attribuer.

Après mise en forme et égouttage des grains de caillé et pressage, dans le cas des fromages à pâte pressée, le caillé est saumuré puis ressuyé avant d'être ensemencé en une flore d'affinage choisie selon l'arôme et le goût que l'on veut conférer au produit final.

Selon une première variante de cette alternative, la solution d'hydrocolloïdes est appliquée pendant ou après l'étape de mise en forme du caillé. Selon cette variante, la solution d'hydrocolloïdes est appliquée sur du caillé partiellement ou totalement égoutté, essentiellement avant saumurage. Ainsi, après égouttage éventuel et avant ou pendant mise en forme des grains du caillé, on dépose autour de ce dernier la solution d'hydrocolloïdes qui gélifie quasi instantanément en quelques secondes sur le caillé par refroidissement.

Selon une deuxième variante de cette alternative, dans le cas d'une technologie traditionnelle de type pâte pressée, le procédé consiste à enrober le caillé avec un gel selon l'invention après l'étape de pressage mais avant saumurage.

Dans ce cas et de façon tout à fait inattendue, la Demanderesse a trouvé que la présence d'un gel semi-perméable selon l'invention sur le caillé égoutté, favorisait le transfert du sel au cours de l'opération de saumurage réduisant le temps nécessaire à cette étape. On peut citer à titre d'illustration, la réduction par 5 du temps de saumurage d'un fromage à pâte pressée de 200 g.

Une deuxième alternative de l'invention concerne les autres types de fromages. Dans ce cas, les caillés d'origine présure ou lactique sont texturés à chaud éventuellement après mélange avec d'autres matières premières laitières ou non (poudre de lait, de lactosérum, de babeurre, crème, protéines et lipides d'origine animale, etc, ...) et éventuellement ajout d'additifs technologiques tels que des sels de fonte aux doses normales d'application (inférieure à 3 % en poids par rapport au poids total de la formulation).

Les produits texturés obtenus sont enrobés de gel semi-perméable pendant ou après formage ; ils sont alors ensemencés en une flore d'affinage choisie selon les arômes et le goût que l'on veut conférer au produit.

Selon une troisième alternative, la solution aqueuse d'hydrocolloïdes est appliquée avant ou après l'étape de mise en forme sur du caillé obtenu selon la première alternative ou des produits obtenus selon la deuxième alternative, ces produits étant foisonnés.

Selon cette alternative, l'invention offre la possibilité de développer des produits à croûte naturelle à partir de caillés acides ou présure ou caillés texturés enrichis auxquels on fait subir un foisonnement afin d'aérer la pâte. Après foisonnement par des moyens conventionnels (injection d'air ou d'azote), le produit foisonné est mis en forme, enveloppé du gel semi-perméable, saumuré, ressuyé, et ensemencé en une flore adaptée aux développements des caractéristiques aromatiques du produit que l'on veut obtenir et ceci sans créer les défauts inhérents à ce type de produits : formation d'une croûte trop épaisse se décollant de la pâte, création des contrastes peu appétissants entre la croûte « cartonneuse » et la pâte foisonnée, défoisonnement superficiel dû à l'implantation de la flore, affaissement du produit, ...

L'enrobage du caillé foisonné avec le gel selon l'invention protège lors des opérations éventuelles de saumurage, ressuyage et affinage, notamment si le produit nécessite des soins en cave (retournement, brossage, ...), le produit fragilisé du fait de l'opération du foisonnement.

Lorsque le fromage que l'on souhaite obtenir ne comporte pas de moyen de séparation de la croûte, le dépôt du gel selon l'invention à un stade quelconque de la fabrication se fait par tout moyen approprié.

On peut citer, à titre d'exemple, le dépôt par trempage dans une solution d'hydrocolloïdes ayant les caractéristiques précitées à une température comprise entre 45 et 95°C, la vaporisation de la solution d'hydrocolloïdes sur le caillé égoutté, ou des techniques comme la co-extrusion où la solution d'hydrocolloïdes est co-extrudée autour d'une pâte fromagère, dans ce dernier cas, la solution d'hydrocolloïdes gélifie au moment de la co-extrusion. L'enrobage sera effectué par le dépôt d'une seule ou de deux couches d'hydrocolloïdes.

Lorsque l'enrobage est réalisé sur un caillé simultanément à la mise en forme, la solution d'hydrocolloïdes est préférentiellement appliquée par co-extrusion de la pâte et de la solution au travers d'une filière de formage.

Une autre possibilité consiste à remplir avec le produit selon les alternatives 1 et 2 de l'invention, un film constitué par le gel composé des polysaccharides, préformé par moulage.

Le dépôt doit permettre une épaisseur du film stabilisé inférieure à 0,5 mm, de préférence comprise entre 0,2 et 0,5 mm, épaisseur nécessaire et suffisante pour assurer une parfaite « pelabilité » de la croûte.

De façon avantageuse, la solution d'hydrocolloïdes utilisés est réalisée par un mélange du ou desdits hydrocolloïdes avec de l'eau à une concentration comprise entre 1 et 5 % en poids, soit une concentration comprise entre 10 g et 50 g/l.

Le gel semi-perméable, selon l'invention, présente les avantages suivants :
- il constitue un milieu de culture pour la flore désirée. En effet, il suffit d'incorporer à la solution d'hydrocolloïde(s) des facteurs de croissance requis (vitamines, acides aminés,...) et de tamponner le gel au pH requis pour permettre le développement de la flore souhaitée ;
- il peut présenter un environnement physico-chimique différent de celui que présenterait le fromage lui-même. Ainsi, on peut très bien concevoir de faire développer des flores neutrophiles sur des caillés acides et vice-versa.

A titre d'exemple, on peut faire développer des *micrococcaceae*, du *Brevibacterium linens* ou autres corynébactéries seules ou en association sur des pâtes « acides » afin de conférer à des fromages frais des goûts et arômes de fromages à croûte lavée, tels que le munster ou le pont-l'évêque.

Les caillés enrobés de gel semi-perméable obtenus selon différentes alternatives seront alors ensemencés en une flore d'affinage choisie selon les arômes et le goût que l'on veut conférer au produit.

Après ensemencement du gel avec une flore appropriée, on laisse le fromage s'affiner pendant le temps nécessaire à l'obtention de l'arôme et du goût désirés et le produit peut alors être conditionné pour sa commercialisation dans tout emballage approprié à sa bonne conservation. Au moment de la consommation, il suffit au consommateur par un simple geste de « peler » le fromage pour le déguster. En effet, il n'y a pas d'accrochage de l'enrobage à la pâte fromagère et ce dernier se retire comme une « peau » de banane.

Le film semi-perméable peut également être éliminé, au stade de la fabrication, par tout moyen industriel approprié et le fromage nu, peut être alors revêtu d'un enrobage à base de cires de fromagerie ou succédanés de cires tels que les acétoglycérides, enduits ou tout autre matériau approprié, ou prédécoupé en portions individuelles et chaque portion emballée pour la commercialisation.

Dans ce dernier cas, l'affinage peut être fortement accéléré sans que l'on ait à se préoccuper de l'aspect final de la croûte puisqu'elle sera éliminée avant emballage ou enrobage.

Dans le cas où le fromage obtenu comporte également au moins un moyen de séparation de la croûte constitué par un ruban, le procédé de fabrication comprend également une étape de pose de ce moyen de séparation de croûte contre la pâte fromagère, comme décrit ci-après et illustré par les dessins joints dans lesquels :
- la figure 1 montre en perspective un fromage affiné selon l'invention à l'issue de sa fabrication ;
- la figure 2 montre en perspective le fromage de la figure 1 auquel a été retiré son moyen de séparation de la croûte pour préparer son pelage ;
- la figure 3 montre en perspective le fromage de la figure 1 dont la croûte a été partiellement séparée de la pâte fromagère et forme deux coques qui n'adhèrent plus à la pâte que par une région d'articulation, et
- les figures 4A à 4H illustrent schématiquement des phases de l'opération de pose du moyen de séparation sur la pâte.

Le fromage selon l'invention représenté sur les figures est constitué d'une pâte fromagère 1 entourée d'une croûte naturelle 2 obtenue par le développement d'une flore d'affinage implantée sur un film placé préalablement sur la surface de la pâte; ce film répondant aux caractéristiques décrites ci-dessus.

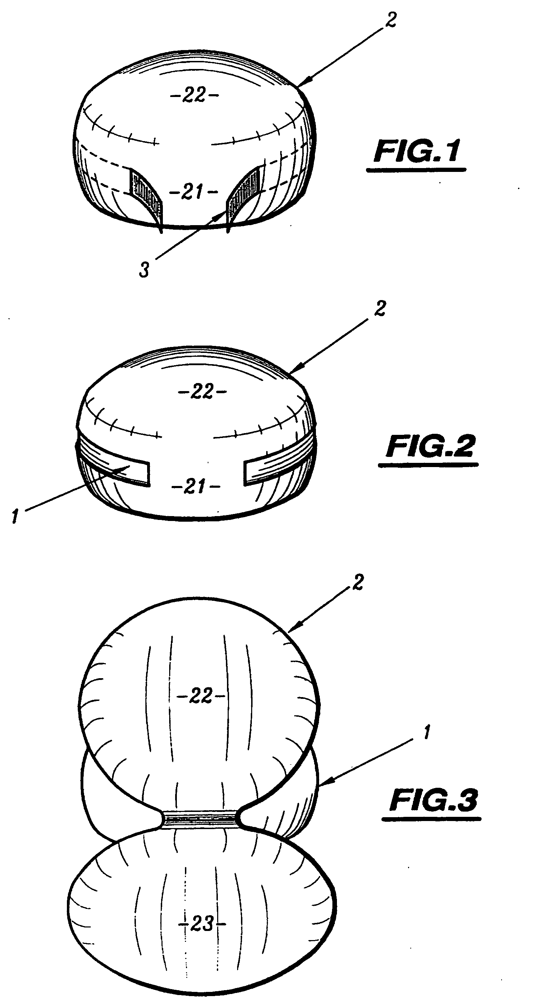

Comme représenté sur la figure 1, le fromage affiné obtenu comporte ainsi une croûte naturelle pelable 2 et un ou plusieurs moyen(s) 3 de séparation de la croûte en régions susceptibles d'être elles-mêmes séparées de la pâte 1, constitué(s) par un ou plusieurs ruban(s) ou ganse(s) dont au moins une partie de la longueur s'étend sous la croûte.

Au moins une extrémité et de préférence deux extrémités d'au moins un ruban 3 dépasse(nt) hors de la croûte.

Ce ruban s'étend de préférence le long du pourtour 21 de la pâte fromagère, et par exemple dans le cas d'un fromage présentant une forme générale de révolution à section droite circulaire, il peut s'étendre avantageusement circonférentiellement autour de la région de la pâte de plus grand diamètre, comme c'est le cas sur les figures. Cette configuration est bien adaptée aux fromages « à pâte molle », c'est-à-dire de consistance molle et dont l'extrait sec est plus faible que celui des fromages à pâte pressée.

Le fromage peut comporter, en alternative ou de plus, un ou plusieurs ruban(s) s'étendant transversalement par rapport au pourtour, par exemple, dans le cas précédent, un ruban s'étendant le long d'un diamètre d'une face d'extrémité 22, d'une génératrice de la forme de révolution, d'un diamètre de l'autre face d'extrémité 23 et d'une autre génératrice, au moins une extrémité du ruban dépassant également hors de la croûte. Un ruban transversal est bien adapté aux fromages de forme approximativement sphérique.

Deux rubans ou plus, par exemple un ruban de pourtour et un ruban transversal, ou des rubans transversaux, peuvent s'entrecroiser sur le pourtour de la pâte ou sur ses faces.

Les rubans peuvent être constitués d'un matériau tissé, d'un matériau tressé à mailles plus ou moins lâches ou sous forme de mailles constituant filet, ou d'un matériau non tissé et non dégradable, par exemple du polyester non tissé, mais notamment pour éviter les déformations spécifiques à chacun de ces deux types de matériaux, avantageusement, ils présentent une structure composite comprenant, de l'extérieur vers l'intérieur en faisant référence au fromage, un film de matière thermoplastique du type polytéréphtalate d'éthylène tel que celui connu commercialement sous le nom de PET23, un adhésif de préférence coloré (par exemple jaune), et un matériau mou tissé de 30 g/m² ; avantageusement, la largeur des rubans est comprise entre 5 et 10 mm ; mais elle peut être différente si la forme du produit le justifie, par exemple avoir la largeur du « talon » dans le cas de fromages ayant la forme d'un cylindre aplati. On assure ainsi une bonne adhérence du ruban du fait de la structure de celui-ci et de sa mouillabilité, tout en permettant une séparation à la fois aisée et bien visible ; de plus, une largeur relativement grande facilite les phases finales de la fabrication qui seront décrites dans la suite.

Des procédés d'application du film d'enrobage de la pâte fromagère destiné à constituer la croûte et préalablement des moyens permettant la séparation de celle-ci sont décrits ci-après.

A l'issue de la fabrication de fromages nus (pâtes fromagères) par exemple par une méthode traditionnelle, au moyen d'un caillage, d'un formage, d'un égouttage, éventuellement d'un salage ou d'un saumurage, et d'un ressuyage, on transfère les pâtes fromagères 1 (fromages nus) en position horizontale et de manière ordonnée et séquentielle vers un poste de pose de ruban et d'enduction.

De manière générale, dans ce poste, on dépose en équilibre la pâte fromagère sur au moins une bande 4, on la maintient en suspension au bout de la ou des bande(s), on saisit la ou les bande(s) sous le point de maintien, et on trempe la pâte fromagère avec une partie de la ou des bande(s) dans une solution d'hydrocolloïdes comme décrit précédemment de façon à enrober l'ensemble, les extrémités du ou des ruban(s) restant libres.

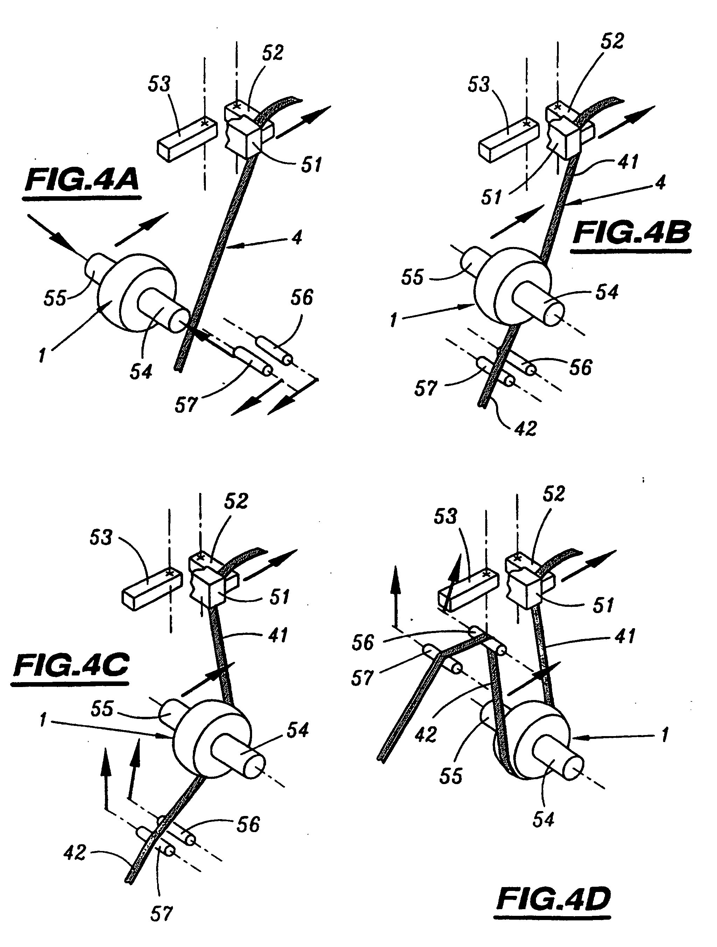

Une partie d'un poste de pose de ruban(s) et d'enrobage particulièrement approprié est représentée schématiquement sur les figures 4A à 4H. Ce type de poste de pose de ruban(s) et d'enrobage est bien adapté pour la fabrication de fromages présentant une forme générale cylindrique dont la section transversale est circulaire ou même polygonale autour d'un axe central et dont le pourtour 21 peut même être légèrement renflé, et deux bases (22, 23) approximativement planes ou peu bombées au moins au voisinage de leur centre, dont l'écartement correspond à l'épaisseur de la pâte fromagère.

Ce poste comprend des groupes de pinces de convoyeur se succédant le long d'un chemin de convoyage, destinés au transport des fromages et à cette fin solidarisés à des moyens d'entraînement (non représentés) pour être animés d'un mouvement de préférence rectiligne continu et horizontal pendant la pose du ruban. Ces groupes comprennent chacun une « enclume » 51 centrale s'étendant horizontalement orthogonalement à la direction de convoyage et deux pinces latérales 52, 53 pivotantes s'étendant de part et d'autre de l'enclume 51, l'axe de pivotement de ces deux pinces 52, 53 étant vertical et les pinces étant mobiles en pivotement entre une position dans laquelle elles s'étendent sensiblement parallèlement à la direction de convoyage et une position dans laquelle elles s'étendent parallèlement à l'enclume et à son voisinage immédiat. Le poste comprend également des pinces 54, 55 à fromage constituées de deux becs disposés en vis-à-vis avec un écartement modifiable commandé et mobiles parallèlement en dessous et à distance du chemin de convoyage, dans un mouvement de va-et-vient le long d'une fraction prédéterminée de celui-ci. Il comprend aussi une paire de « navettes » 56, 57 constituées par des tiges approximativement cylindriques s'étendant horizontalement orthogonalement au chemin de convoyage, parcourant chacune, en restant parallèle à elle-même, un trajet fermé dans un plan vertical passant par le chemin de convoyage, avec un écartement mutuel variable également commandé.

Une bande 4, par exemple de six millimètres de large est enroulée en bobine (non représentée) autour d'un axe s'étendant orthogonalement au chemin de convoyage en dessous de celui-ci; on tire cette bande 4 au dessous du chemin de convoyage au moyen d'une navette, de manière à la faire progresser en direction de l'enclume 51 immédiatement en aval si l'on considère la direction de progression des groupes de pinces le long du chemin de convoyage, la paire de navettes 56, 57 étant alors disposée de telle sorte qu'elle soit à un niveau inférieur à celui des groupes de pinces, et qu'à ce niveau elle soit en aval de la bande.

Les pâtes fromagères 1 étant antérieurement horizontales (c'est-à-dire positionnées avec leur axe central vertical), successivement on les bascule tout d'abord pour leur faire prendre une position verticale (axe central horizontal orthogonalement au chemin de convoyage) en dessous du chemin de convoyage en étant centrées dans le sens de l'épaisseur par rapport au plan vertical passant par le chemin de convoyage, et en amont du tronçon de bande 4 qui s'étend au même niveau.

Ainsi, initialement, la première pâte fromagère 1 verticale en partant de l'aval est pincée entre les pinces 54, 55 maintenues en pression respectivement contre les bases de celle-ci, le ruban est lui-même pincé entre l'enclume 51 et la pince de convoyeur aval 52 s'étendant parallèlement à l'enclume (position fermée), et les navettes 56, 57 sont à un niveau inférieur à la pâte fromagère, les navettes et la pâte fromagère étant respectivement de part et d'autre de la bande (figure 4A).

Tout d'abord, on déplace la pâte fromagère 1 au moyen des pinces 54, 55, en la maintenant toujours en dessous du chemin de convoyage à la même distance de celui-ci et centrée dans le sens de l'épaisseur par rapport au plan vertical passant par le chemin de convoyage, en direction de la bande 4 (vers l'aval), et on déplace éventuellement la paire de navettes 56, 57 en les maintenant au même niveau également en direction de la bande (vers l'amont), jusqu'à ce que la navette 57 la plus en amont arrive au contact de la bande ; ainsi l'action de la pâte fromagère 1 et celle de la navette amont 57 font s'infléchir la bande pincée entre l'enclume 51 et la pince aval 52 (figure 4B).

On poursuit les mouvements de la pâte fromagère et de la paire de navettes pour commencer l'enroulement de la bande 4 autour de la pâte fromagère (figure 4C) positionnée entre un brin aval 41 de la bande pincé entre la pince de convoyeur aval et l'enclume et un brin amont 42 poussé par la paire de navettes.

Puis, en poursuivant le mouvement de la pâte fromagère 1, on actionne la paire de navettes 56, 57 vers le haut pour poursuivre l'enroulement de la bande 4 sur la moitié inférieure du pourtour de la pâte fromagère grâce à la poussée des deux navettes sur la bande (figure 4D).

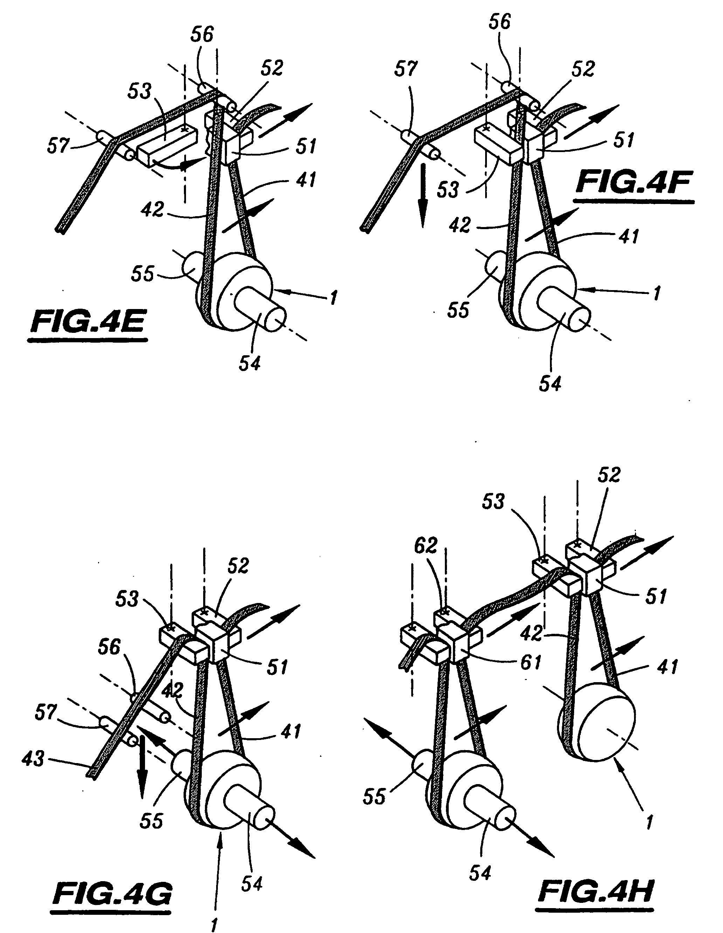

En poursuivant les mouvement de progression vers l'aval du groupe de pinces, de la pâte fromagère, et des navettes, on fait progresser la navette aval 56 plus vite vers l'aval que la navette amont 57 de telle sorte que lorsque les navettes sont à un niveau supérieur au groupe de pinces, le brin amont 42 de la bande vienne en contact avec ou à proximité immédiate de la face de l'enclume 51 opposée à celle contre laquelle est pincée le brin aval 41 (figure 4E).

On fait alors pivoter la pince de convoyeur amont 53 pour l'amener au contact du brin amont 42 de la bande et on poursuit le mouvement de cette pince jusqu'à ce que ce brin amont de la bande 4 soit à son tour pincé, entre l'enclume 51 et la pince amont 53 (figure 4F).

Après quoi, la pâte fromagère 1 étant suspendue par la bande maintenue pincée, on abaisse les navettes 56, 57 pour les ramener vers leur emplacement initial, et la partie 43 de la bande en amont du brin amont 42 précédemment mentionné prend une position inclinée (figure 4G).

Alors, on desserre les pinces 54, 55 de la pâte fromagère suspendue, on les ramène vers leur emplacement initial, et on actionne le groupe de pinces de convoyeur suivant en direction de l'amont, pour qu'il pince une région de cette partie amont 43 de la bande entre son enclume 61 et sa pince de convoyeur aval 62, en laissant du « mou » dans la partie de bande 4 s'étendant entre la pince aval 62 de ce groupe de pinces et la pince amont 53 du groupe précédent.

Lorsque la bande est pincée entre l'enclume et la pince aval correspondante, et la pâte fromagère suivante immédiatement en amont est pincée par les pinces à fromage 54, 55, les navettes 56, 57 ayant regagné leur emplacement initial, un cycle identique au précédent se répète et une autre pâte fromagère est suspendue de la même manière à la bande (figure 4H), et ainsi de suite.

Les fromages étant en équilibre sur la bande 4 entre les deux brins maintenus suspendus entre pinces et enclume, on les amène un à un jusqu'à un premier bac thermostaté contenant une solution de revêtement, ici une solution de gomme gellane, on saisit les liens sous le point de maintien, et par un mouvement vertical, on trempe la pâte fromagère et la partie du ruban qui entoure son pourtour dans la solution ce qui constitue une première opération de trempage ; puis on remonte l'ensemble et pour obtenir une bonne régularité de revêtement on répète la totalité de l'opération de trempage et de remontée dans un deuxième bac thermostaté contenant une solution de gomme gellane pour réaliser un deuxième trempage.

Après quoi, les groupes de pinces poursuivant leur progression continue vers l'aval, les produits sont amenés un à un au-dessus d'un bac contenant une suspension d'ensemencement en germes de surface (ici *géotrichum candidum* + *pénicillium camemberti*) et on reproduit les opérations de trempage et de remontée du produit déjà mentionnées, dans ce bac d'ensemencement.

A la sortie de ce dernier bac, on a recouvert les brins de la bande 4 jusqu'au niveau de la surface supérieure du produit; on libère alors le produit, de la chaîne de transfert du poste de pose de ruban et d'enduction, en coupant la bande 4 au-dessus du pincement, les deux brins restant suffisamment visibles pour servir d'organes de préhension et permettre par la suite l'élimination de la croûte pelable 2 formée par dessus eux par le développement des germes de surface sur la solution de gellane, et on évacue le produit ainsi enrobé.

Après que les produits ont été évacués un à un du poste de pose du ruban et d'enduction, on les met en hâloir dans les conditions de température et d'hygrométrie adaptées au développement de la flore ensemencée, pendant le temps nécessaire au développement des caractéristiques organoleptiques souhaitées.

A la fin de cette période d'affinage de longueur définie suivant les qualités organoleptiques et le type de flore du produit que l'on veut obtenir (par exemple une période d'une huitaine de jours), on peut emballer les fromages sous un film tel qu'un film cellulosique et les regrouper par quantités, par exemple par groupes de cinq, dans un sachet tel qu'un sachet connu dans la technique sous le nom de « sachet flow-pack ».

Pour la consommation du fromage, on élimine bien entendu l'emballage, et sans avoir besoin de l'aide d'un objet tranchant, par un mouvement simple, on tire sur les extrémités du ruban 3 dépassant de la croûte naturelle 2 et on amorce ainsi la séparation du ruban que l'on poursuit jusqu'à sa séparation totale, ce qui dénude la plus grande partie de la longueur du pourtour du fromage.

Après quoi, on peut aisément peler le produit en écartant les coques formées par la croûte 2, de part et d'autre de la pâte fromagère 1, et la croûte étant ainsi séparée de la pâte, cette dernière est prête à être consommée, et présente les qualités organoleptiques d'un fromage maturé à l'aide d'une flore superficielle d'affinage.

Quoique les formes arrondies pour les produits (cylindre entier ou fragmenté, sphère etc...), et les poids de 5 à 100 g, soient préférés, des formes et des poids très divers se prêtent bien à une pose de ruban(s) et une enduction selon l'invention, et plus particulièrement dans la gamme de 5 à 300 grammes. Simplement, pour les produits les plus lourds, de préférence on entrecroise deux rubans, et on suremballe les produits individuellement.

Egalement, au lieu de tremper la pâte entourée de son ruban ou de ses rubans dans une solution d'hydrocolloïdes et dans une solution bactérienne, on pourra vaporiser l'une ou/et l'autre solution sur l'ensemble ruban-caillé avant de couper le(s) ruban(s) de telle façon que les extrémités dépassent de la solution vaporisée, ou encore tremper et vaporiser.

L'invention permet ainsi, en favorisant le développement accéléré de la flore, un développement plus rapide et intense des caractéristiques organoleptiques sans nuire à la conservation ultérieure du produit.

Par rapport aux procédés de fromagerie traditionnels, l'invention apporte les avantages technologiques suivants :
- la réduction du temps d'utilisation des moules « process » dans le cycle de fabrication, du fait qu'il est possible de déposer très tôt dans le cycle de fabrication le gel semi-perméable et que ce dernier assure le maintien de la forme sans le moule ;
- la réduction de la durée du saumurage car le gel semi-perméable accélère les transferts ;
- le maintien de la membrane semi-perméable jusqu'à la consommation du produit car le produit conserve l'aspect d'un fromage à croûte naturelle, la membrane étant peu perceptible à l'oeil du fait de sa faible épaisseur (inférieure à 0,5 mm) ;
- la réalisation des échanges nécessaires entre la flore de surface et le caillé aussi bien de façon centrifuge (nutriments de la pâte fromagère vers la flore) que centripète (migration des composés d'arôme dans la pâte) assurant ainsi l'affinage souhaité au produit tout en permettant de dissocier la nature de la flore de la nature de la pâte ;
- l'accélération de l'affinage (notamment dans les cas où on souhaite retirer la membrane avant emballage) en permettant l'affinage dans des conditions de températures et d'hygrométrie qui seraient incompatibles avec la tenue du produit dans des conditions d'affinage conventionnelles ;
- en ce qui concerne les caillés fragilisés par foisonnement, l'invention permet le développement d'une flore traditionnelle à leur surface en éliminant les défauts inhérents au développement d'une flore directement sur la pâte (difficultés d'assurer des soins en caves, formation d'une croûte trop épaisse, de contrastes peu appétissants entre croûte et pâte,...) ;
- dans le cadre du développement de produits nouveaux, l'invention permet de créer des produits à arôme et texture différents des produits traditionnels par découplage pâte/flore superficielle, et d'affiner par une flore de surface des produits aérés, la membrane servant de « coque », ce qui facilite les soins en cave et rend moins fragile le produit ;
- les avantages pour le consommateur sont indéniables, celui-ci pouvant éliminer la croûte du fromage d'un simple geste en saisissant les extrémités du ruban le cas échéant et en tirant sur ceux-ci jusqu'à dénuder la plus grande partie de la longueur du pourtour de fromage, sans ustensiles et sans pertes de la pâte du fromage.

L'invention est illustrée par des exemples donnés à titre illustratif.

### EXEMPLE 1

On fabrique un fromage à pâte pressée de 20 g par un procédé classique. Le caillé est égoutté, moulé et pressé selon les conditions habituellement utilisées en technologie pâte pressée (Eck, 1997).

A la sortie de la presse, les fromages obtenus sont immergés par trempage dans une solution à 30 g/l de gomme gellane commercialisée sous la marque Kelcogel®. La température d'enrobage est de 65°C et pH de 5,5. La gélification s'effectue en 3 secondes et l'épaisseur du film stabilisé est de 0,3 mm.

Le pourcentage de solution déposée représente environ 10% du poids du fromage avant enrobage.

Les fromages sont alors maintenus en acidification à une température comprise entre 23 et 26°C pendant 4 à 6 heures.

En fin d'acidification, les fromages sont saumurés 1 à 2 minutes pour obtenir un taux de sel compris entre 1,4 et 1,8 %.

Sortie saumure, les fromages sont ensemencés avec une flore constituée d'une association de *Penicillium candidum* et de levures.

Les fromages entrent alors en cave pour saumurage. Les propriétés de résistance mécanique permettent d'utiliser des températures plus élevées que celles pratiquées traditionnellement.

Ainsi, l'affinage est effectué à une température de 20 à 25°C et à une hygrométrie de 98 % de HR (humidité relative) sans déformation des fromages.

L'affinage est réalisé en cinq jours versus 10 à 12 jours pour un affinage traditionnel de 15 à 20°C avec le même type de flore.

A la fin du temps d'affinage et d'obtention des qualités aromatiques requises, les fromages sont débarrassés du film par pelage.

Les fromages sont alors enrobés de cire paraffine et conditionnés dans leur emballage définitif.

### EXEMPLE 2

On fabrique un fromage à pâte molle cylindrique de 200 g. Le caillé est obtenu par coagulation à J'aide de présure, puis égoutté et moulé.

A la sortie du moule, les produits à une température de 25°C sont enrobés par trempage dans une solution de gomme gellane à 30 g/l à pH 5,5 et à une température de 55°C : cette solution est enrichie en vitamines et oligo-éléments nécessaires au développement de la flore d'affinage.

On procède à un seul trempage. La gélification s'effectue en 4 secondes et l'épaisseur du film obtenu est de 0,4 mm pour une quantité d'enrobage avoisinant 10 % du poids du fromage avant enrobage.

Les fromages sont alors maintenus en acidification à une température comprise entre 23 et 26°C pendant 4 à 6 heures.

En fin d'acidification, les fromages sont saumurés pendant 5 à 7 minutes pour obtenir un taux de sel compris entre 1,4 et 1,8 % soit un temps d'affinage divisé par 5 pour un fromage non enrobé et une prise de sel équivalente.

Sortie saumure, les fromages sont ressuyés et ensemencés avec une flore constituée d'une association *Geotrichum candidum*/*Brevibacterium linens*.

Les fromages entrent alors en cave pour l'affinage, où ils sont affinés pendant une semaine à des températures comprises entre 20 et 25°C et 98 % de HR et ceci sans déformation des fromages. En fin d'affinage, les fromages sont emballés sous cellophane et placés dans des boîtes en carton pour commercialisation.

Le consommateur dispose d'un fromage ayant les caractéristiques d'une croûte naturelle qu'il pourra ôter en la pelant.

### EXEMPLE 3

On prépare un caillé acide par coagulation à l'aide de ferments lactiques d'un concentré de lait obtenu par ultrafiltration. Le caillé obtenu est enrichi par de la crème pour obtenir une teneur en matière grasse du produit de 60 % exprimé en gras/sec. Le caillé enrichi est alors foisonné par injection d'azote dans la pâte par passage dans un appareil du type Mondomix®.

Le caillé enrichi et une solution de gel alimentaire à 20 g/l composé d'un mélange de gomme gellane et d'alginates dans un rapport 50/50 sont transférés dans un coextrudeur permettant d'obtenir à la sortie des boules des 50 g de caillé enrobé. La quantité d'enrobage est de 10 % par rapport au caillé non enrobé et l'épaisseur du film déposé est de 0,3 mm.

Le fromage foisonné enrobé subit alors un ensemencement en *Penicillium candidum* que l'on laisse développer pendant une semaine à 15°C et 98 % HR avant conditionnement du produit.

Au moment de la consommation, il suffira d'éliminer la croûte par simple pelage pour consommer le produit qui présentera les caractéristiques d'une pâte molle traditionnelle à coeur tendre.

### EXEMPLE 4

On fabrique un fromage à pâte pressée de 20 g par un procédé classique. Le caillé est égoutté, moulé, pressé, mis à acidifier saumuré et ressuyé selon les conditions habituellement utilisées en technologie pâte pressée (Eck, 1997).

A la sortie de la presse, les fromages nus, ayant une forme arrondie comme représenté sur la figure 1, avec un diamètre de 4 cm environ et une largeur de talon d'environ 1,5 cm, sont transférés en position horizontale et de manière ordonnée et séquentielle vers un poste de dépose de ruban et d'enduction.

A ce poste, les fromages sont maintenus en équilibre sur une bande en polyester non tissé de largeur 6 mm. On saisit le(s) bande(s) sous un point de maintien et on trempe le fromage ainsi qu'une partie du ruban dans un bac thermostaté contenant une solution à 30 g/l de la gomme gellane commercialisée sous la marque Kelcogel®, les extrémités du ruban restant libres. La température du bain d'enrobage est de 65°C et le pH de 5,5.

Après un trempage de 2 secondes, le produit ainsi que la partie du ruban immergé sont retirés immédiatement du bain, la gélification s'effectue en 10 secondes à l'air libre et l'épaisseur du film est de 0,3 mm.

On répète l'opération de trempage et de remontée du produit selon les modalités précédentes ; l'épaisseur de l'enrobage est de 0,5 mm après gélification.

Le produit enrobé est ensuite amené au-dessus d'un bac comprenant une suspension d'ensemencement d'un mélange composé de *Geotrichum Candidum* et *Penicillium Camemberti,* où on reproduit l'opération de trempage et de remontée du produit.

Le produit est alors enrobé et ensemencé sur toute sa surface y compris les rubans jusqu'à la face supérieure du produit.

On libère le produit de sa chaîne de transfert du poste de pose du ruban et d'enduction en coupant la bande au-dessus du pincement, les deux extrémités du ruban restent visibles pour servir ultérieurement d'organes de préhension. Les produits sont alors mis en cave d'affinage pendant cinq jours à une température de 20 à 25°C et à une hydrométrie de 98 % d'HR.

A la fin du cycle d'affinage, les fromages sont conditionnés sous film celluloïque et regroupés sous sachet « flow-pack ».

Au moment de la consommation, il suffira au consommateur après élimination du film d'attraper les brins du ruban dépassant de la superficie du fromage, de tirer sur les extrémités du ruban pour entraîner la séparation du ruban que l'on poursuit jusqu'à la séparation totale des demi-coques formées par la croûte et de séparer la pâte de ces demi-coques.

## Revendications

1. Fromage affiné **caractérisé en ce qu'**il est obtenu par application sur la masse de fromage d'un film pelable d'épaisseur non supérieure à 0,5 mm formé par un gel alimentaire obtenu à partir d'une solution aqueuse d'un ou plusieurs hydrocolloïdes de concentration comprise entre 1 et 5 % en poids et de viscosité inférieure à 0,300 Pa.s contenant de la gellane, mesurée pour un gradient de vitesse de 152 s⁻¹ à 60°C, sur lequel est mis à développer une flore d'affinage, ledit film étant maintenu sur le produit final ou retiré et éventuellement remplacé par un enrobage.

2. Fromage affiné selon la revendication 1, **caractérisé en ce que** la viscosité de la solution aqueuse d'un ou plusieurs hydrocolloïdes est comprise entre 0,015 et 0,25 Pa.s, mesurée pour un gradient de vitesse de 152 s⁻¹ à 60°C.

3. Fromage affiné selon la revendication 1 ou 2, **caractérisé en ce que** le film est maintenu sur le produit final après développement de la flore d'affinage et constitue une croûte naturelle détachable par pelage, lors de sa consommation.

4. Fromage affiné selon l'une quelconque des revendications 1 à 3, **caractérisé en ce que** le film est retiré par pelage après le développement de la flore d'affinage et la pâte fromagère nue est enrobée au moyen d'un enrobage pour fromages.

5. Fromage affiné selon l'une quelconque des revendications précédentes, **caractérisé en ce que** le gel alimentaire est constitué d'un mélange de gellane avec des polysaccharides d'origine autre que microbienne ou des protéines.

6. Fromage affiné selon la revendication 5, **caractérisé en ce que** le mélange est constitué par au moins 30 % en poids de gellane.

7. Fromage affiné selon l'une des revendications 1 à 4, **caractérisé en ce que** le gel alimentaire est constitué de gomme gellane.

8. Fromage affiné selon l'une quelconque des revendications précédentes, **caractérisé en ce que** le film stabilisé a une épaisseur comprise entre 0,2 et 0,5 mm, de préférence 0,3 et 0,5 mm.

9. Fromage affiné selon l'une quelconque des revendications précédentes, **caractérisé en ce qu'**il comporte en outre au moins un moyen (3) de séparation de la croûte constitué par un ruban dont au moins une partie de la longueur s'étend entre la pâte fromagère et la croûte.

10. Fromage selon la revendication 9, **caractérisé en ce qu'**il comporte un moyen (3) de séparation de la croûte (2) constitué par un ruban s'étendant le long d'au moins une partie du pourtour de la pâte fromagère, et dont au moins une extrémité dépasse hors de la croûte.

11. Fromage selon l'une quelconque des revendications 9 et 10, **caractérisé en ce qu'**il comporte un moyen (3) de séparation de la croûte (2) constitué par un ruban s'étendant transversalement par rapport au pourtour (21) de la pâte fromagère.

12. Fromage selon l'une quelconque des revendications 9 à 11, **caractérisé en ce qu'**il comporte deux moyens (3) de séparation de la croûte (2) constitués respectivement de deux rubans entrecroisés.

13. Fromage selon l'une quelconque des revendications 9 à 12, **caractérisé en ce que** le ruban (3) est constitué d'au moins un film en un matériau non tissé et non dégradable.

14. Fromage selon l'une quelconque des revendications 9 à 13 **caractérisé en ce que** le ruban (3) présente une largeur comprise entre 5 et 10 mm.

15. Procédé de fabrication d'un fromage affiné **caractérisé en ce que** :
(1) on constitue une pâte fromagère que l'on met en forme ;
(2) on applique sur la masse de la pâte fromagère avant, pendant ou après mise en forme une solution aqueuse d'un ou plusieurs hydrocolloïdes de concentration comprise entre 1 et 5% en poids et de viscosité inférieure à 0,300 Pa.s contenant de la gellane, de préférence entre 0,015 et 0,25 Pa.s, mesurée pour un gradient de vitesse de 152 s⁻¹ à 60°C, et on met à gélifier ;
(3) on ensemence la pâte fromagère enrobée d'un gel alimentaire obtenue à l'étape (2) avec une flore d'affinage de surface que l'on laisse développer le temps nécessaire à l'obtention des caractéristiques organoleptiques souhaitées ;
(4) éventuellement, on détache par pelage le film formé du gel alimentaire et de la flore microbienne ; et
(5) on conditionne le produit final, le cas échéant, après enrobage éventuel du produit de l'étape (4) au moyen d'un enrobage de fromagerie.

16. Procédé selon la revendication 15, **caractérisé en ce que** le temps de gélification est inférieur à 10 secondes, de préférence inférieur à 5 secondes.

17. Procédé de fabrication d'un fromage selon la revendication 15, **caractérisé en ce que** le gel alimentaire est constitué de gomme gellane.

18. Procédé de fabrication d'un fromage selon la revendication 15, **caractérisé en ce que** le gel alimentaire est appliqué sur du caillé, pendant ou après mise en forme de celui-ci.

19. Procédé de fabrication d'un fromage selon l'une des revendications 15 à 18, **caractérisé en ce que** la solution aqueuse d'hydrocolloïdes est appliquée sur du caillé formé partiellement ou totalement égoutté.

20. Procédé de fabrication d'un fromage selon les revendications 15 à 19, **caractérisé en ce que** la solution aqueuse d'hydrocolloïdes est appliquée sur du caillé égoutté avant saumurage.

21. Procédé de fabrication d'un fromage selon la revendication 15, **caractérisé en ce que** la solution aqueuse d'hydrocolloïdes est appliquée sur du caillé, éventuellement enrichi en matières premières d'origine laitière et/ou additifs technologiques avant de subir un traitement de texturation à chaud ou à froid.

22. Procédé selon la revendication 15, **caractérisé en ce que** la solution aqueuse d'hydrocolloïdes est appliquée sur du caillé texturé, éventuellement enrichi ou non, égoutté et foisonné.

23. Procédé de fabrication d'un fromage selon la revendication 15, **caractérisé en ce que** la solution aqueuse d'hydrocolloïdes formant le gel alimentaire est enrichie en vitamines ou oligo-éléments pour favoriser le développement de la flore d'affinage.

24. Procédé de fabrication d'un fromage selon l'une quelconque des revendications 15 à 23, **caractérisé en ce que** la solution aqueuse d'hydrocolloïdes est appliquée sur le caillé par trempage, coextrusion ou pulvérisation.

25. Procédé de fabrication d'un fromage affiné **caractérisé en ce qu'**
(a) on constitue une pâte fromagère ;
(b) on remplit avec la pâte fromagère un film d'hydrocolloïdes préformé à partir d'une solution aqueuse d'un ou plusieurs hydrocolloïdes de concentration comprise entre 1 et 5 % en poids, et de viscosité inférieure à 0,300 Pa.s contenant de la gellane, de préférence entre 0,015 et 0,25 Pa.s, mesurée pour un gradient de vitesse de 152 s⁻¹ à 60°C.

26. Procédé de fabrication d'un fromage affiné selon l'une quelconque des revendications 9 à 14, **caractérisé en ce que** l'on constitue une pâte fromagère (1) et on dispose au moins une partie d'un moyen (3) de séparation de la croûte (2) contre la pâte fromagère.

27. Procédé selon la revendication 26, **caractérisé en ce que**, pour disposer au moins une partie d'un moyen (3) de séparation de croûte (2) contre la pâte fromagère (1), on pose la pâte fromagère après égouttage sur une partie d'une bande (4) destinée à constituer un ruban (3) formant le moyen (3) de séparation de croûte.

28. Procédé selon l'une quelconque des revendications 26 et 27 **caractérisé en ce que** l'on suspend une pâte fromagère (1) sur une partie d'une bande (4) destinée à constituer un ruban (3) et on plonge l'ensemble dans une solution d'hydrocolloïde(s), et éventuellement dans une solution bactérienne de façon à ce qu'au moins une partie du futur ruban (3) soit recouverte d'une couche de cette(ces) solution(s).

29. Procédé selon la revendication 28 **caractérisé en ce que** l'on coupe la bande (4) pour constituer le ruban (3) en laissant deux extrémités dépasser de la couche d'hydrocolloïde(s).

30. Procédé selon l'une quelconque des revendications 28 et 29 **caractérisé en ce que** l'on ensemence la couche d'hydrocolloïde(s) au moyen d'une flore superficielle d'affinage que l'on laisse développer pendant une durée nécessaire à l'obtention de caractéristiques organoleptiques prédéterminées.

31. Procédé selon l'une quelconque des revendications 26 à 30, **caractérisé en ce que** l'on suspend une pâte fromagère (1) sur une partie d'une bande (4) destinée à constituer un ruban (3) et on vaporise l'ensemble par au moins une solution parmi une solution d'hydrocolloïdes et une solution bactérienne de façon à ce qu'au moins une partie du futur ruban (3) soit recouverte d'une couche de cette solution.

## Patentansprüche

1. Veredelter Käse, **dadurch gekennzeichnet, dass** er erhalten wird durch Anwendung eines abziehbaren Films mit einer Dicke nicht über 0,5 mm auf die Käsemasse, der durch ein Nahrungsmittelgel gebildet wird, das erhalten wird ausgehend von einer Gellan enthaltenden, wässrigen Lösung von einem oder mehreren Hydrokolloiden einer Konzentration zwischen 1 und 5 Gew.% und einer Viskosität unter 0,300 Pa·s, gemessen für einen Geschwindigkeitsgradienten von 152 s⁻¹ bei 60°C, auf dem man einen Veredelungsbewuchs sich entwickeln lässt, wobei der Film auf dem Endprodukt erhalten bleibt oder abgenommen und gegebenenfalls durch eine Umhüllung ersetzt wird.

2. Veredelter Käse nach Anspruch 1, **dadurch gekennzeichnet, dass** die Viskosität der wässrigen Lösung von einem oder mehreren Hydrokolloiden zwischen 0,015 und 0,25 Pa·s, gemessen für einen Geschwindigkeitsgradienten von 152 s⁻¹ bei 60°C, ist.

3. Veredelter Käse nach Anspruch 1 oder 2, **dadurch gekennzeichnet, dass** der Film auf dem Endprodukt nach Entwicklung des Veredelungsbewuchses beibehalten wird und eine natürliche Rinde bildet, die bei ihrem Verbrauch durch Abziehen abgenommen werden kann.

4. Veredelter Käse nach einem der Ansprüche 1 bis 3, **dadurch gekennzeichnet, dass** der Film nach der Entwicklung des Veredelungsbewuchses mittels Abziehen abgenommen wird und die nackte Käsepaste mithilfe einer Umhüllung für Käse umhüllt wird.

5. Veredelter Käse nach einem der vorhergehenden Ansprüche, **dadurch gekennzeichnet, dass** das Nahrungsmittelgel aus einem Gemisch von Gellan mit Polysacchariden eines anderen als einem mikrobiellen Ursprung oder mit Proteinen besteht.

6. Veredelter Käse nach Anspruch 5, **dadurch gekennzeichnet, dass** das Gemisch aus mindestens 30 Gew.% Gellan besteht.

7. Veredelter Käse nach einem der Ansprüche 1 bis 4, **dadurch gekennzeichnet, dass** das Nahrungsmittelgel aus Gellangummi besteht.

8. Veredelter Käse nach einem der vorhergehenden Ansprüche, **dadurch gekennzeichnet, dass** der stabilisierte Film eine Dicke zwischen 0,2 und 0,5 mm, vorzugsweise 0,3 und 0,5 mm hat.

9. Veredelter Käse nach einem der vorhergehenden Ansprüche, **dadurch gekennzeichnet, dass** er außerdem mindestens ein Mittel (3) zur Trennung der Rinde aufweist, das gebildet wird von einem Band, von dem sich mindestens ein Teil der Länge zwischen der Käsepaste und der Rinde erstreckt.

10. Käse nach Anspruch 9, **dadurch gekennzeichnet, dass** er ein Mittel (3) zur Trennung der Rinde (2) aufweist, das gebildet wird von einem Band, das sich entlang mindestens eines Teils des Umfangs der Käsepaste erstreckt und von dem mindestens ein Ende durch die Rinde nach außen ragt.

11. Käse nach einem der Ansprüche 9 und 10, **dadurch gekennzeichnet, dass** er ein Mittel (3) zur Trennung der Rinde (2) aufweist, das gebildet wird von einem Band, das sich bezogen auf den Umfang (21) der Käsepaste quer erstreckt.

12. Käse nach einem der Ansprüche 9 bis 11, **dadurch gekennzeichnet, dass** er zwei Mittel (3) zur Trennung der Rinde (2) aufweist, die jeweils aus zwei überkreuzten Bändern bestehen.

13. Käse nach einem der Ansprüche 9 bis 12, **dadurch gekennzeichnet, dass** das Band (3) aus mindestens einem Film aus einem nicht gewebten und nicht abbaubaren Material besteht.

14. Käse nach einem der Ansprüche 9 bis 13, **dadurch gekennzeichnet, dass** das Band (3) eine Breite zwischen 5 und 10 mm besitzt.

15. Verfahren zur Herstellung eines veredelten Käses, **dadurch gekennzeichnet, dass**:
(1) eine Käsepaste hergestellt und in Form gebracht wird;
(2) auf die Masse der Käsepaste vor, während oder nach dem Formen eine Gellan enthaltende, wässrige Lösung von einem oder mehreren Hydrokolloiden mit einer Konzentration zwischen 1 und 5 Gew.% und einer Viskosität unter 0,300 Pa·s, vorzugsweise zwischen 0,015 und 0,25 Pa·s, gemessen für einen Geschwindigkeitsgradienten von 152 s⁻¹ bei 60°C, angewendet wird und gelieren gelassen wird;
(3) die Käsepaste, die von einem im Schritt (2) e rhaltenen Nahrungsmittelgel umhüllt ist, mit einem oberflächlichen Veredelungsbewuchs angeimpft wird, den man sich für die Zeitdauer entwickeln lässt, die nötig ist, damit die gewünschten organoleptischen Eigenschaften erhalten werden;
(4) gegebenenfalls der aus dem Nahrungsmittelgel und dem Mikrobenbewuchs gebildete Film durch Abziehen entfernt wird; und
(5) gegebenenfalls das Endprodukt, nach wahlfreier Umhüllung des Produkts von Schritt (4) mithilfe einer Käseumhüllung, konditioniert wird.

16. Verfahren nach Anspruch 15, **dadurch gekennzeichnet, dass** die Dauer der Gelbildung kleiner als 10 Sekunden, vorzugsweise kleiner als 5 Sekunden ist.

17. Verfahren zur Herstellung eines Käses nach Anspruch 15, **dadurch gekennzeichnet, dass** das Nahrungsmittelgel aus Gellangummi besteht.

18. Verfahren zur Herstellung eines Käses nach Anspruch 15, **dadurch gekennzeichnet, dass** das Nahrungsmittelgel auf Dickmilch während oder nach deren Formung aufgebracht wird.

19. Verfahren zur Herstellung eines Käses nach einem der Ansprüche 15 bis 18, **dadurch gekennzeichnet, dass** die wässrige Lösung von Hydrokolloiden auf gebildete Dickmilch aufgebracht wird, die teilweise oder vollständig abgetropft ist.

20. Verfahren zur Herstellung eines Käses nach den Ansprüchen 15 bis 19, **dadurch gekennzeichnet, dass** die wässrige Lösung von Hydrokolloiden auf abgetropfte Dickmilch vor dem Einlegen in Salzlake aufgebracht wird.

21. Verfahren zur Herstellung eines Käses nach Anspruch 15, **dadurch gekennzeichnet, dass** die wässrige Lösung von Hydrokolloiden auf Dickmilch aufgebracht wird, die gegebenenfalls mit aus Milch stammenden Ausgangssubstanzen und/oder technologischen Additiven angereichert ist, bevor sie einer Warm- oder Kalttexturierungsbehandlung unterworfen wird.

22. Verfahren nach Anspruch 15, **dadurch gekennzeichnet, dass** die wässrige Lösung von Hydrokolloiden auf texturierte, gegebenenfalls angereicherte oder nicht angereicherte, abgetropfte und gequollene Dickmilch aufgebracht wird.

23. Verfahren zur Herstellung eines Käses nach Anspruch 15, **dadurch gekennzeichnet, dass** die wässrige Lösung von Hydrokolloiden, die das Nahrungsmittelgel bildet, mit Vitaminen oder Spurenelementen angereichert ist, damit die Entwicklung des Veredelungsbewuchses gefördert wird.

24. Verfahren zur Herstellung eines Käses nach einem der Ansprüche 15 bis 23, **dadurch gekennzeichnet, dass** die wässrige Lösung von Hydrokolloiden auf die Dickmilch mittels Eintauchen, Koextrusion oder Zerstäubung aufgebracht wird.

25. Verfahren zur Herstellung eines veredelten Käses, **dadurch gekennzeichnet, dass**
(a) eine Käsepaste hergestellt wird;
(b) mit der Käsepaste ein Film von Hydrokolloiden wieder aufgefüllt wird, der ausgehend von einer Gellan enthaltenden, wässrigen Lösung von einem oder mehreren Hydrokolloiden einer Konzentration zwischen 1 und 5 Gew.% und einer Viskosität unter 0,300 Pa·s, vorzugsweise zwischen 0,015 und 0,25 Pa·s, gemessen für einen Geschwindigkeitsgradienten von 152 s⁻¹ bei 60°C, vorgeformt wird.

26. Verfahren zur Herstellung eines veredelten Käses nach einem der Ansprüche 9 bis 14, **dadurch gekennzeichnet, dass** eine Käsepaste (1) hergestellt wird und mindestens ein Teil eines Mittels (3) zur Trennung der Rinde (2) gegen die Käsepaste abgesetzt wird.

27. Verfahren nach Anspruch 26, **dadurch gekennzeichnet, dass** zum Absetzen mindestens eines Teils eines Mittels (3) zur Trennung der Rinde (2) gegen die Käsepaste (1) die Käsepaste nach Abtropfen auf einen Teil eines Streifens (4) gelegt wird, der dazu bestimmt ist, ein Band (3) zu bilden, welches das Mittel (3) zur Trennung der Rinde darstellt.

28. Verfahren nach einem der Ansprüche 26 und 27, **dadurch gekennzeichnet, dass** eine Käsepaste (1) auf einem Teil eines Streifens (4) getragen wird, der dazu bestimmt ist, ein Band (3) zu bilden, und das Ganze in einer Lösung von Hydrokolloid(en) und gegebenenfalls in einer Bakteriensuspension untergetaucht wird, so dass mindestens ein Teil des zukünftigen Bandes (3) wieder mit einer Schicht dieser Lösung(en) bedeckt wird.

29. Verfahren nach Anspruch 28, **dadurch gekennzeichnet, dass** der Streifen (4) geschnitten wird, damit er das Band (3) bildet, indem man zwei Enden durch die Schicht von Hydrokolloid(en) ragen lässt.

30. Verfahren nach einem der Ansprüche 28 und 29, **dadurch gekennzeichnet, dass** die Schicht von Hydrokolloid(en) mithilfe eines oberflächlichen Veredelungsbewuchses angeimpft wird, den man sich für eine Zeitdauer entwickeln lässt, die notwendig ist, damit vorbestimmte organoleptische Eigenschaften erhalten werden.

31. Verfahren nach einem der Ansprüche 26 bis 30, **dadurch gekennzeichnet, dass** eine Käsepaste (1) auf einem Teil eines Streifens (4) getragen wird, der dazu bestimmt ist, ein Band (3) zu bilden, und das Ganze mit mindestens einer Lösung aus einer Lösung von Hydrokolloiden und einer Bakterienlösung besprüht wird, so dass mindestens ein Teil des zukünftigen Bandes (3) mit einer Schicht dieser Lösung bedeckt ist.

## Claims

1. Ripened cheese **characterised in that** it is obtained by applying to the mass of cheese a peelable film having a thickness not greater than 0.5 mm formed of a food-grade gel obtained from an aqueous solution of one or more hydrocolloids in a concentration of between 1 and 5 % by weight and having a viscosity below 0.300 Pa.s, containing gellan, measured for a velocity gradient of 152 s⁻¹ at 60°C, on which a ripening flora is allowed to develop, the said film being maintained on the final product or withdrawn and optionally replaced by a coating.

2. Ripened cheese according to claim 1, **characterised in that** the viscosity of the aqueous solution of one or more hydrocolloids lies between 0.015 and 0.25 Pa.s, measured for a velocity gradient of 152 s⁻¹ at 60°C.

3. Ripened cheese according to claim 1 or 2, **characterised in that** the film is maintained on the final product after the ripening flora has developed and constitutes a natural crust that is detachable by peeling, when it is consumed.

4. Ripened cheese according to any one of claims 1 to 3, **characterised in that** the film is withdrawn by peeling after the development of the ripening flora and the bare cheese paste is enrobed by means of a coating for cheeses.

5. Ripened cheese according to any one of the preceding claims, **characterised in that** the food-grade gel consists of a mixture of gellan with polysaccharides having an origin other than from microbes or proteins.

6. Ripened cheese according to claim 5, **characterised in that** the mixture consists of at least 30 % by weight of gellan.

7. Ripened cheese according to one of claims 1 to 4, **characterised in that** the food-grade gel consists of gellan gum.

8. Ripened cheese according to any one of the preceding claims, **characterised in that** the stabilised film has a thickness of between 0.2 and 0.5 mm, preferably 0.3 and 0.5 mm.

9. Ripened cheese according to any one of the preceding claims, **characterised in that** it additionally includes at least one means (3) for separating the crust consisting of a tape, of which at least one part of the length extends between the cheese paste and the crust.

10. Cheese according to claim 9, **characterised in that** it includes a means (3) for separating the crust (2) consisting of a tape extending along at least part of the periphery of the cheese paste, and of which at least one end extends beyond the crust.

11. Cheese according to either of claims 9 or 10, **characterised in that** it includes a means (3) for separating the crust (2) consisting of a tape extending transversely with respect to the periphery (21) of the cheese paste.

12. Cheese according to any one of claims 9 to 11, **characterised in that** it includes two means (3) for separating the crust (2), consisting respectively of two intersecting tapes.

13. Cheese according to any one of claims 9 to 12, **characterised in that** the tape (3) consists of at least one film made of a non-woven and non-degradable material.

14. Cheese according to any one of claims 9 to 13, **characterised in that** the tape (3) has a width of between 5 and 10 mm.

15. Method for manufacturing a ripened cheese, **characterised in that** :
(1) a cheese paste is prepared which is formed;
(2) there is applied to the mass of cheese paste before, during or after forming, an aqueous solution of one or more hydrocolloids with a concentration of between 1 and 5 % by weight and a viscosity less than 0.300 Pa.s containing gellan, preferably between 0.015 and 0.25 Pa.s, measured for a velocity gradient of 152 s⁻¹ at 60°C, and is allowed to gel;
(3) the cheese enrobed with a food-grade gel obtained in step (2) is seeded with a surface-ripening flora that is allowed to develop for a period of time necessary to obtain the desired organoleptic characteristics;
(4) optionally, the film formed of food-grade gel and microbial flora is detached by peeling; and
(5) the final product is packaged, optionally after any enrobing of the product in stage (4) with a cheese coating.

16. Method according to claim 15, **characterised in that** the gelling time is less than 10 seconds, preferably less than 5 seconds.

17. Method for manufacturing a cheese according to claim 15, **characterised in that** the food-grade gel consists of gellan gum.

18. Method for manufacturing a cheese according to claim 15, **characterised in that** the food-grade gel is applied to curd, while or after this is formed.

19. Method for manufacturing a cheese according to one of claims 15 to 18, **characterised in that** the aqueous solution of hydrocolloids is applied to partially or completely drained formed curd.

20. Method for manufacturing a cheese according to claims 15 to 19, **characterised in that** the aqueous solution of hydrocolloids is applied to drained curd before brine treatment.

21. Method for manufacturing a cheese according to claim 15, **characterised in that** the aqueous solution of hydrocolloids is applied to the curd, optionally enriched with starting materials of milk origin and/or technological additives before being subjected to a hot or cold texturising treatment.

22. Method according to claim 15, **characterised in that** the aqueous solution of hydrocolloids is applied to the textured curd, optionally enriched or not, drained and expanded.

23. Method for manufacturing a cheese according to claim 15, **characterised in that** the aqueous solution of hydrocolloids forming the food-grade gel is enriched with vitamins or trace elements in order to promote the development of the ripening flora.

24. Method for manufacturing a cheese according to any one of claims 15 to 23, **characterised in that** the aqueous solution of hydrocolloids is applied to the curd by dipping, co-extrusion or spraying.

25. Method for manufacturing a ripened cheese, **characterised in that**
(a) a cheese paste is prepared;
(b) a film of hydrocolloids preformed from an aqueous solution of one or more hydrocolloids with a concentration of between 1 and 5 % by weight and a viscosity below 0.300 Pa.s containing gellan, preferably between 0.015 and 0.25 Pa.s, measured for a velocity gradient of 152 s⁻¹ at 60°C, is filled with the cheese paste.

26. Method for manufacturing a ripened cheese according to any one of claims 9 to 14, **characterised in that** a cheese paste (1) is prepared and at least part of a means (3) for separating the crust (2) is deposited against the cheese paste.

27. Method according to claim 26, **characterised in that**, in order to position at least part of a means (3) separating the crust (2) against the cheese paste (1), the cheese paste is placed after draining on a part of a strip (4) intended to constitute a tape (3) forming the means (3) for separating the crust.

28. Method according to either of claims 26 or 27, **characterised in that** a cheese paste (1) is suspended on part of a strip (4) intended to constitute a tape (3) and the whole is immersed in a solution of hydrocolloid(s) and optionally in a bacterial solution so that at least part of the future tape (3) is covered with a layer of this solution or these solutions.

29. Method according to claim 28, **characterised in that** the strip (4) is cut so as to constitute the tape (3) while leaving two ends extending beyond.the layer of hydrocolloid(s).

30. Method according to either of claims 28 or 29, **characterised in that** the layer of hydrocolloid(s) is seeded by means of a ripening surface flora that is left to develop for a period necessary for obtaining predetermined organoleptic characteristics.

31. Method according to any one of claims 26 to 30, **characterised in that** cheese paste (1) is suspended on part of a strip (4) intended to constitute a tape (3) and the whole is sprayed with at least one solution from among a solution of hydrocolloids and a bacterial solution so that at least part of the future tape (3) is covered with a layer of this solution.
